# DEMANDE DE BREVET EUROPEEN

(11) **EP 4 841 130 A1**
(43) Date de publication de la demande: **18.11.2026**
(21) Numéro de dépôt: 25218367.8
(22) Date de dépôt: 25.11.2025
(51) Int. Cl.: F16F 15/31

(54) **VOLANT A INERTIE VARIABLE DEGRESSIVE**

(30) Priorité: 13.05.2025 FR 2505042
(71) Demandeur: Orge Mecanique, 67230 Obenheim (FR)
(72) Inventeur: HOLFERT, Dominique, 67150 ERSTEIN (FR); LHOMMEAU, Valentin, 67150 GERSTHEIM (FR)
(74) Mandataire: Cabinet Bleger-Rhein-Poupon

(57) **Abrégé**

L'invention concerne un volant à inertie variable dégressive (1) comportant un plateau (2) mobile en rotation autour d'un axe de rotation principal (Xp), au moins deux systèmes mobiles (3 ; 3' ; 3"), des moyens de montage en déplacement (4 ; 4' ; 4") de chacun desdits au moins deux systèmes mobiles par rapport au plateau, entre une position éloignée et une position rapprochée par rapport à l'axe de rotation principal (Xp) et des moyens de rappel (5 ; 5' ; 5") desdits au moins deux systèmes mobile vers la position éloignée, ce volant est configuré pour que lesdits au moins deux systèmes mobiles adoptent la position éloignée pour une vitesse de rotation du plateau inférieure ou égale à une vitesse déterminée et se dirigent vers la position rapprochée en cas d'augmentation de la vitesse de rotation et pour une vitesse de rotation supérieure à la vitesse déterminée.

## Description

La présente invention concerne un volant à inertie variable dégressive.

Cette invention concerne le domaine des systèmes rotatifs motorisés, plus particulièrement le domaine des systèmes rotatifs motorisés comportant un moteur à régime variable.

La présente invention trouvera une application particulièrement appropriée (mais aucunement limitative) dans le domaine des véhicules automoteurs, plus particulièrement dans le domaine des véhicules automobiles (notamment celui des voitures et des motos), dont le déplacement est assuré par l'intermédiaire d'un moteur (thermique ou électrique) à régime de rotation variable.

L'on connait, d'ores et déjà, des systèmes rotatifs motorisés qui comportent, d'une part, un moteur (notamment thermique ou électrique) à régime variable, d'autre part, au moins un élément rotatif, d'autre part encore, au moins un moyen de transmission qui est configuré pour transmettre un mouvement de rotation généré par le moteur audit au moins un élément rotatif et, d'autre part aussi, au moins un volant à inertie qui est interposé entre ledit moteur et ledit au moins un moyen de transmission.

Un tel volant à inertie est, principalement, destiné à réduire les fluctuations vibratoires et à stocker de l'énergie afin de maintenir les performances du système rotatif à tous les régimes de rotation.

Parmi les volants à inertie on connait, en particulier, des volants à inertie variable, plus particulièrement des volants à inertie variable progressive, c'est-à-dire, des volants dont l'inertie augmente avec la vitesse de rotation du moteur.

De tels volants à inertie variable progressive permettent d'obtenir une amélioration des performances du système rotatif motorisé ceci pour des vitesses de rotation élevées. Cependant ces volants à inertie variable n'apportent aucun gain à faible vitesse de rotation du moteur.

La présente invention se veut à même de remédier, au moins en partie, aux inconvénients des volants à inertie variable de l'état de la technique.

A cet effet, l'invention concerne un volant à inertie variable dégressive. Ce volant comporte, d'une part, un plateau qui s'étend selon un plan et qui est configuré pour être mobile en rotation autour d'un axe de rotation principal qui est perpendiculaire au plan, d'autre part, au moins deux systèmes mobiles, d'autre part encore, des moyens de montage en déplacement qui sont configurés pour assurer un montage en déplacement de chacun desdits au moins deux systèmes mobiles par rapport au plateau, ceci entre une position éloignée par rapport à l'axe de rotation principal et une position rapprochée par rapport à l'axe de rotation principal et, d'autre part aussi, des moyens de rappel qui sont configurés pour rappeler lesdits au moins deux systèmes mobile vers la position éloignée, ceci au moins à partir de la position rapprochée, tandis que le volant est configuré en sorte que lesdits au moins deux systèmes mobiles, d'une part, adoptent la position éloignée pour une vitesse de rotation du plateau inférieure ou égale à une vitesse déterminée et, d'autre part, se dirigent en direction de la position rapprochée, ceci en cas d'augmentation de la vitesse de rotation du plateau et pour une vitesse de rotation du plateau supérieure à la vitesse déterminée.

Selon une autre caractéristique, les moyens de montage en déplacement sont configurés pour assurer un montage en rotation de chacun desdits au moins deux systèmes mobiles sur le plateau, ceci autour d'un axe de rotation qui est parallèle à l'axe de rotation principal du plateau ainsi qu'entre la position éloignée et la position rapprochée.

De manière additionnelle, le volant est configuré en sorte qu'un cercle circonscrit auxdits au moins deux systèmes mobiles présente, d'une part et en position éloignée desdits au moins deux systèmes mobiles, un rayon éloigné et, d'autre part et en position rapprochée desdits au moins deux systèmes mobiles, un rayon rapproché qui est inférieur au rayon éloigné.

Encore une autre caractéristique concerne le fait que lesdits au moins deux systèmes mobiles comportent, chacun, d'une part, une première partie d'un tel système mobile, qui s'étend d'un premier côté d'un plan qui passe par l'axe de rotation principal du plateau ainsi que par l'axe de rotation d'un tel système mobile, et sur laquelle les moyens de rappel agissent et, d'autre part, une deuxième partie d'un tel système mobile, qui s'étend d'un deuxième côté dudit plan, et au niveau de laquelle un centre de gravité d'un tel système mobile est localisé.

Encore une autre caractéristique concerne le fait que, d'une part, la première partie desdits au moins deux systèmes mobiles présente une première masse et est soumise à une première force centrifuge sous l'effet de la rotation du plateau, d'autre part, la deuxième partie desdits au moins deux systèmes mobiles présente une deuxième masse et est soumise à une deuxième force centrifuge sous l'effet de la rotation du plateau, d'autre part encore, les moyens de rappel, qui sont associés auxdits au moins deux systèmes mobiles, présentent une force de rappel tandis que le volant est configuré en sorte que, d'une part et pour une vitesse de rotation du plateau inférieure ou égale à la vitesse de rotation déterminée, la deuxième force centrifuge est inférieure à la somme de la première force centrifuge et de la force de rappel, ceci de sorte que lesdits au moins deux systèmes mobiles adoptent la position éloignée et, d'autre part et pour une vitesse de rotation du plateau supérieure à la vitesse de rotation déterminée, la deuxième force centrifuge est supérieure à la somme de la première force centrifuge et de la force de rappel, ceci de sorte que lesdits au moins deux systèmes mobiles adoptent au moins une position intermédiaire entre la position éloignée et la position rapprochée, voire adoptent la position rapprochée.

Encore une autre caractéristique concerne le fait que, d'une part, la première partie desdits au moins deux systèmes mobiles comporte une première masselotte qui présente une première masse et, d'autre part, la deuxième partie desdits au moins deux systèmes mobiles comporte une deuxième masselotte qui présente une deuxième masse qui est supérieure à la première masse de la première masselotte.

Encore une autre caractéristique concerne le fait que le volant comporte des moyens de limitation qui sont configurés pour limiter le déplacement de chacun desdits au moins deux systèmes mobiles par rapport au plateau.

L'invention concerne, également, un système rotatif motorisé comportant, d'une part, un moteur à régime variable, d'autre part, au moins un élément rotatif et, d'autre part encore, au moins un moyen de transmission qui est configuré pour transmettre un mouvement de rotation généré par le moteur audit au moins un élément rotatif et, d'autre part aussi, au moins un volant à inertie qui est interposé entre le moteur et ledit au moins un élément rotatif. Dans ce système rotatif motorisé, ledit au moins un volant à inertie est un volant à inertie variable dégressive qui présente les caractéristiques décrites ci-dessus.

Ainsi, l'invention concerne un volant à inertie variable dégressive qui comporte au moins deux systèmes mobiles qui, d'une part, adoptent une position éloignée pour une vitesse de rotation du plateau inférieure ou égale à une vitesse déterminée et, d'autre part, se dirigent en direction d'une position rapprochée, ceci en cas d'augmentation de la vitesse de rotation du plateau et pour une vitesse de rotation du plateau supérieure à la vitesse déterminée.

Ces caractéristiques permettent, avantageusement, d'augmenter le couple du moteur, en particulier à faible vitesse de rotation de ce moteur (bas régime). Il en résulte une amélioration substantielle du fonctionnement du système rotatif motorisé, en particulier à bas régime de rotation du moteur. En fait, à bas régime, ce fonctionnement s'approche, alors, du fonctionnement (voire équivaut au fonctionnement) d'un moteur dont le couple est plus élevé.

L'augmentation du couple du moteur à bas régime permet, alors également, une augmentation de la plage d'utilisation optimale du moteur et permet, donc, l'utilisation optimale de ce moteur à tous les régimes de rotation de ce moteur. Il en résulte une amélioration substantielle de l'agrément et des performances du système rotatif motorisé (plus particulièrement dans le cas d'un véhicule automoteur), en particulier pour des systèmes rotatifs motorisé (plus particulièrement des véhicules automoteurs) équipés d'un moteur dont le couple est faible.

De manière additionnelle, les caractéristiques de ce volant à inertie variable dégressive permettent, avantageusement, des montées en régime franches et constantes mais permettent également d'atteindre un régime élevé sans difficulté.

De plus, ces caractéristiques permettent une augmentation de la régularité cyclique du système rotatif motorisé à bas régime.

Finalement, le fonctionnement du volant à inertie variable dégressive conforme à l'invention ne nécessite aucun actionnement qu'il soit mécanique, électrique, électronique ou magnétique.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

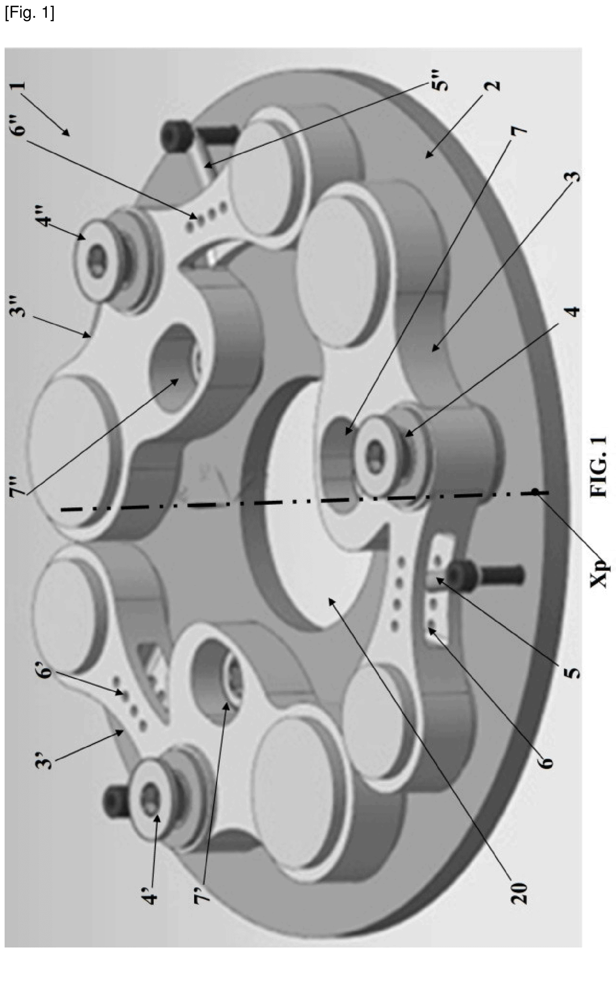

[Fig.1] représente une vue schématisée et en perspective d'un volant à inertie variable dégressive conforme à l'invention.
[Fig.2] représente une vue schématisée et de dessus du volant à inertie variable dégressive illustré figure 1, ceci dans la position éloignée ainsi que dans la position rapprochée desdits au moins deux systèmes mobiles.
[Fig.3] représente une vue schématisée et de dessus du volant à inertie variable dégressive illustré figures 1 et 2, ceci dans la position éloignée desdits au moins deux systèmes mobiles.
[Fig.4] représente une vue schématisée et de dessus du volant à inertie variable dégressive illustré figures 1 à 3, ceci dans la position rapprochée desdits au moins deux systèmes mobiles.

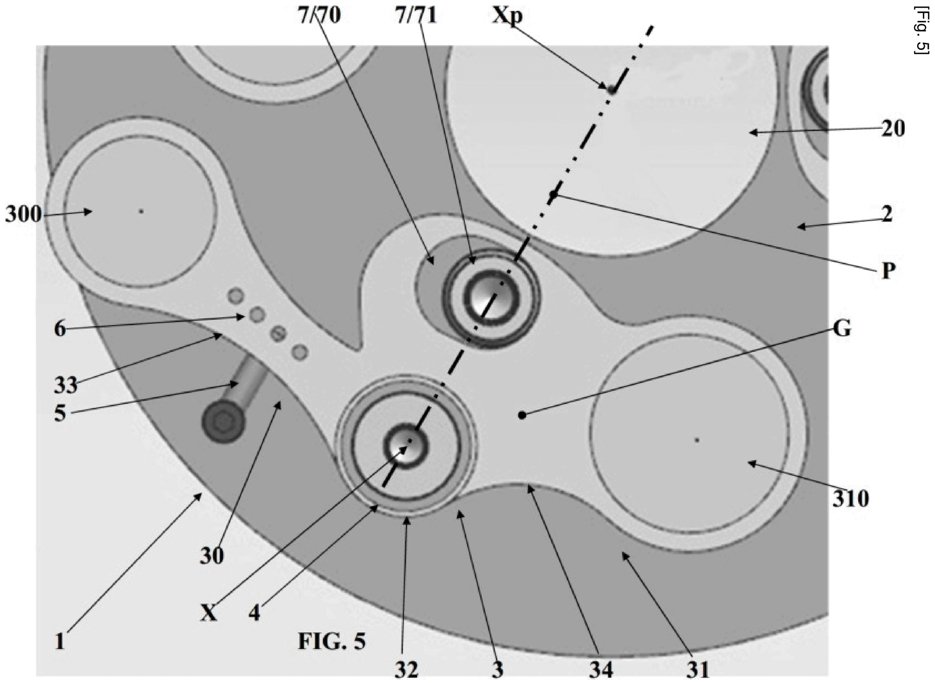

[Fig.5] représente une vue schématisée et de dessus d'un détail du volant à inertie variable dégressive illustré figures 1 à 4, ceci dans la position éloignée desdits au moins deux systèmes mobiles.

En référence aux figures des dessins ci-joints, la présente invention concerne le domaine des systèmes rotatifs motorisés, plus particulièrement le domaine des systèmes rotatifs motorisés comportant un moteur à régime variable.

L'invention concerne, alors, un volant à inertie variable dégressive 1 qui est configuré en sorte que son inertie varie en fonction de sa vitesse de rotation, plus particulièrement en sorte que son inertie diminue lorsque sa vitesse de rotation augmente.

Pour des raisons de simplification, dans la suite de la description, un tel volant à inertie variable dégressive 1 sera dénommé « volant 1 ».

Ce volant 1 est configuré pour être associé à un moyen de transmission (non représenté) qui est conçu pour transmettre un mouvement de rotation généré par moteur à régime variable (non représenté) à au moins un élément rotatif (non représenté) d'un système rotatif motorisé (non représenté).

Tel que visible sur les figures en annexe, ce volant 1 comporte un plateau 2, qui s'étend selon un plan, et qui est configuré pour être mobile en rotation autour d'un axe de rotation principal Xp qui est perpendiculaire au plan selon lequel ce plateau 2 s'étend.

Ce plateau 2 comporte un trou traversant 20, qui est central par rapport au plateau 2, qui présente un centre par lequel passe l'axe de rotation principal Xp, et qui est configuré, d'une part, pour être traversé par un arbre (non représenté) que le moyen de transmission susmentionné comporte et, d'autre part, pour être solidaire en rotation de cet arbre.

Ce volant 1 comporte, également, au moins deux systèmes mobiles (3 ; 3' ; 3"), voire (et de préférence) trois systèmes mobiles (3 ; 3' ; 3") comme illustré sur les figures en annexe.

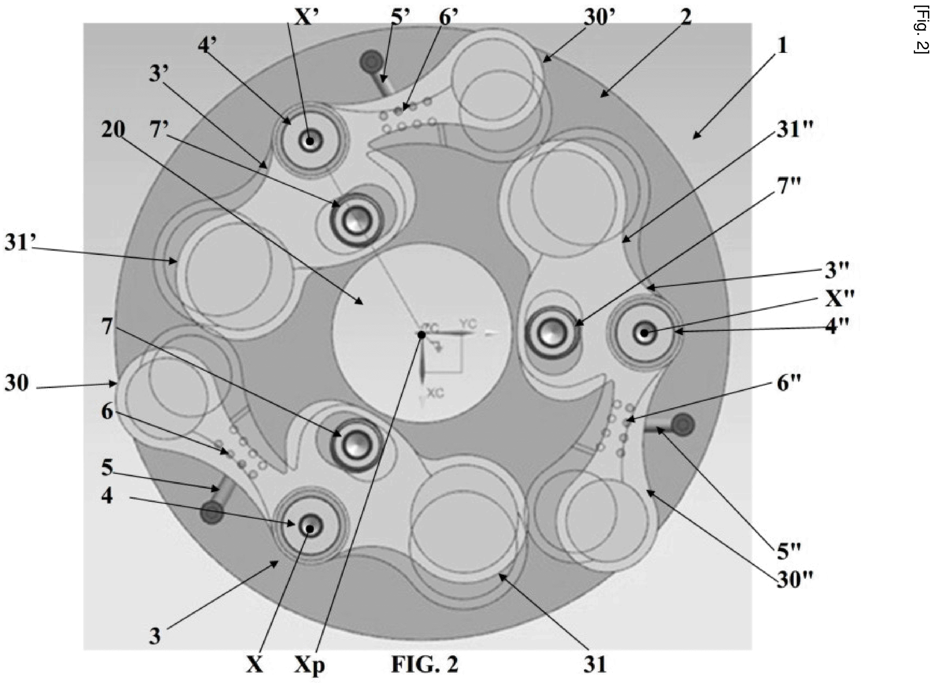

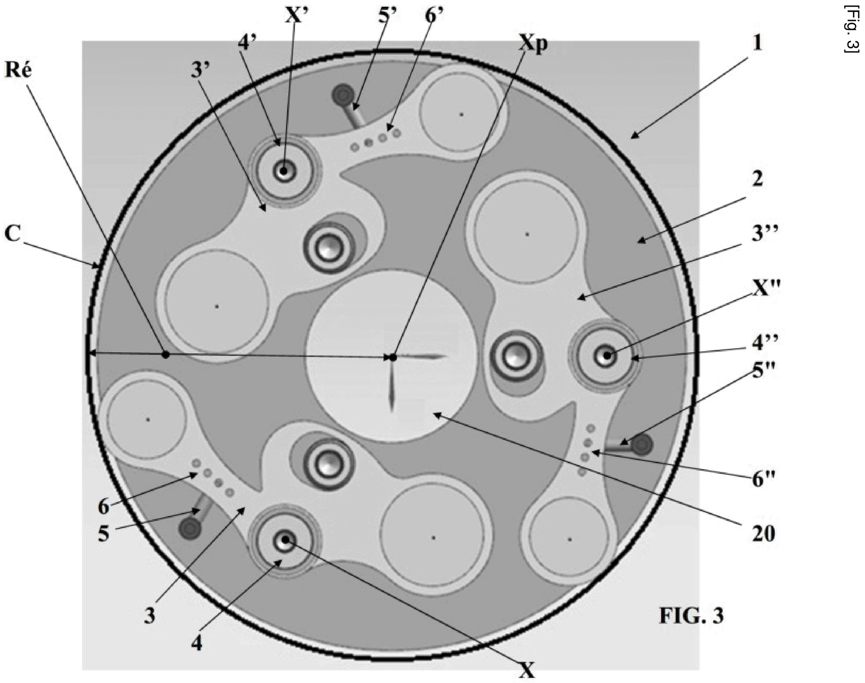

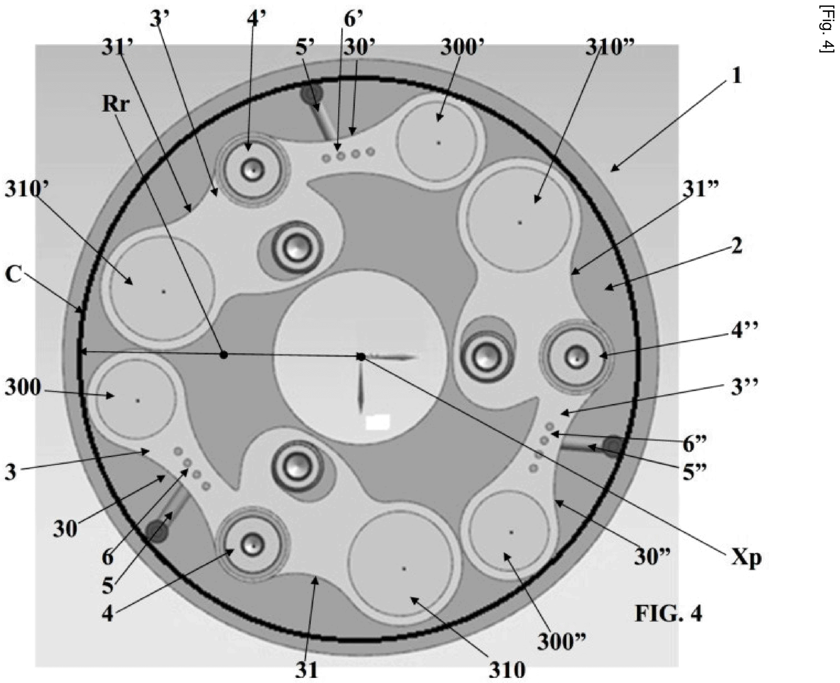

Ce volant 1 comporte, encore, des moyens de montage en déplacement (4 ; 4' ; 4") qui sont configurés pour assurer un montage en déplacement de chacun desdits au moins deux systèmes mobiles (3 ; 3' ; 3") par rapport au plateau 2 (plus particulièrement sur ce plateau 2), ceci entre une position éloignée par rapport à l'axe de rotation principal Xp (figures 2 et 3) et une position rapprochée par rapport à l'axe de rotation principal Xp (figures 2 et 4).

Ce volant 1 comporte, aussi, des moyens de rappel (5 ; 5' ; 5") qui sont configurés pour rappeler lesdits au moins deux systèmes mobile (3 ; 3' ; 3") vers la position éloignée, ceci au moins à partir de la position rapprochée, voire encore à partir de n'importe quelle position intermédiaire entre la position rapprochée et la position éloignée.

Selon l'invention, ce volant 1 est configuré en sorte que lesdits au moins deux systèmes mobiles (3 ; 3' ; 3"), d'une part, adoptent la position éloignée (figure 3) au moins pour une vitesse de rotation du plateau 2 qui est inférieure ou égale à une vitesse déterminée et, d'autre part, se dirigent en direction de la position rapprochée (figure 4), ceci en cas d'augmentation de la vitesse de rotation du plateau 2 et pour une vitesse de rotation du plateau 2 supérieure à la vitesse déterminée.

Tel que mentionné ci-dessus, le volant 1 comporte des moyens de montage en déplacement (4 ; 4' ; 4") de chacun desdits au moins deux systèmes mobiles (3 ; 3' ; 3") par rapport au plateau 2.

De tels moyens de montage en déplacement (4 ; 4' ; 4") sont configurés pour assurer un montage en rotation de chacun desdits au moins deux systèmes mobiles (3 ; 3' ; 3") sur le plateau 2, ceci autour d'un axe de rotation (X ; X' ; X") qui est parallèle à l'axe de rotation principal Xp du plateau 2 ainsi qu'entre la position éloignée et la position rapprochée.

Selon une autre caractéristique, le volant 1 est configuré en sorte qu'un cercle circonscrit C auxdits au moins deux systèmes mobiles (3 ; 3' ; 3") présente, d'une part et en position éloignée desdits au moins deux systèmes mobiles (3 ; 3' ; 3"), un rayon éloigné Ré (voire un diamètre éloigné) et, d'autre part et en position rapprochée desdits au moins deux systèmes mobiles (3 ; 3' ; 3"), un rayon rapproché Rr (voire un diamètre rapproché) qui est inférieur au rayon éloigné Ré.

Cette caractéristique permet, avantageusement, en cas d'augmentation de la vitesse de rotation du plateau 2 et pour une vitesse de rotation du plateau 2 supérieure à la vitesse déterminée, de réduire le rayon (ou le diamètre) extérieur du volant 1 et, ainsi, de réduire l'inertie de ce volant 1.

Selon une autre caractéristique, lesdits au moins deux systèmes mobiles (3 ; 3' ; 3") comportent, chacun, d'une part, une première partie (30 ; 30' ; 30") d'un tel système mobile (3 ; 3' ; 3"), qui s'étend d'un premier côté d'un plan P qui passe par l'axe de rotation principal Xp du plateau 2 ainsi que par l'axe de rotation (X ; X' ; X") d'un tel système mobile (3 ; 3' ; 3"), et sur laquelle les moyens de rappel (5 ; 5' ; 5") agissent et, d'autre part, une deuxième partie (31 ; 31' ; 31") d'un tel système mobile (3 ; 3' ; 3"), qui s'étend d'un deuxième côté dudit plan P, et au niveau de laquelle un centre de gravité G d'un tel système mobile (3 ; 3' ; 3") est localisé.

De manière additionnelle, dans ce volant 1, d'une part, un premier cercle, qui est circonscrit à la première partie (30 ; 30' ; 30") desdits au moins deux systèmes mobiles (3 ; 3' ; 3"), présente un premier rayon éloigné, ceci en position éloignée desdits au moins deux systèmes mobiles (3 ; 3' ; 3") - tel que visible figure 3 - ainsi qu'un premier rayon rapproché, ceci en position rapprochée desdits au moins deux systèmes mobiles (3 ; 3' ; 3") - tel que visible figure 4.

D'autre part, dans ce volant 1, un deuxième cercle, qui est circonscrit à la deuxième partie (31 ; 31' ; 31") desdits au moins deux systèmes mobiles (3 ; 3' ; 3"), présente un deuxième rayon éloigné, ceci en position éloignée desdits au moins deux systèmes mobiles (3 ; 3' ; 3") - tel que visible figure 3- ainsi qu'un deuxième rayon rapproché, ceci en position rapprochée desdits au moins deux systèmes mobiles (3 ; 3' ; 3") - tel que visible figure 3.

D'autre part encore, dans ce volant 1, le premier rayon éloigné est supérieur au premier rayon rapproché et, d'autre part aussi, le deuxième rayon éloigné et le deuxième rayon rapproché sont inférieurs au moins au premier rayon éloigné. De manière préférentielle, le deuxième rayon éloigné et le deuxième rayon rapproché sont, également, inférieurs au premier rayon rapproché.

Selon une autre caractéristique, d'une part, la première partie (30 ; 30' ; 30") desdits au moins deux systèmes mobiles (3 ; 3' ; 3") présente une première masse et est soumise à une première force centrifuge sous l'effet de la rotation du plateau 2, d'autre part, la deuxième partie (31 ; 31' ; 31") desdits au moins deux systèmes mobiles (3 ; 3' ; 3") présente une deuxième masse et est soumise à une deuxième force centrifuge sous l'effet de la rotation du plateau 2, d'autre part encore, les moyens de rappel (5 ; 5' ; 5"), qui sont associés auxdits au moins deux systèmes mobiles (3 ; 3' ; 3") - plus particulièrement à la première partie (30 ; 30' ; 30") desdits au moins deux systèmes mobiles (3 ; 3' ; 3") -, présentent une force de rappel.

De manière additionnelle, le volant 1 est, alors, configuré en sorte que, d'une part et pour une vitesse de rotation du plateau 2 inférieure ou égale à la vitesse de rotation déterminée, la deuxième force centrifuge est inférieure à la somme de la première force centrifuge et de la force de rappel, ceci de sorte que lesdits au moins deux systèmes mobiles (3 ; 3' ; 3") adoptent la position éloignée (et, de ce fait, le volant 1 présente une inertie importante) et, d'autre part et pour une vitesse de rotation du plateau 2 supérieure à la vitesse de rotation déterminée, la deuxième force centrifuge est supérieure à la somme de la première force centrifuge et de la force de rappel, ceci de sorte que lesdits au moins deux systèmes mobiles (3 ; 3' ; 3") adoptent au moins une position intermédiaire entre la position éloignée et la position rapprochée (et, de ce fait, le volant 1 présente une inertie plus faible), voire adoptent la position rapprochée.

De manière particulière, pour une vitesse de rotation supérieure à la vitesse de rotation déterminée, lesdits au moins deux systèmes mobiles (3 ; 3' ; 3") tendent à adopter la position rapprochée ceci en cas d'augmentation de la vitesse de rotation.

Selon une autre caractéristique du volant 1, lesdits au moins deux systèmes mobiles (3 ; 3' ; 3") comportent, chacun, d'une part, une première masselotte (300 ; 300' ; 300") qui présente une première masse et, d'autre part, une deuxième masselotte (310 ; 310' ; 310") qui présente une deuxième masse qui est supérieure à la première masse de la première masselotte (300 ; 300' ; 300").

A ce propos, on observera que c'est, plus particulièrement, la première partie (30 ; 30' ; 30") desdits au moins deux systèmes mobiles (3 ; 3' ; 3") qui comporte une telle première masselotte (300 ; 300' ; 300") qui présente une première masse tandis que la deuxième partie (31 ; 31' ; 31") desdits au moins deux systèmes mobiles (3 ; 3' ; 3") comporte une telle deuxième masselotte (310 ; 310' ; 310") qui présente une deuxième masse qui est supérieure à la première masse de la première masselotte (300 ; 300' ; 300").

Aussi et selon une première caractéristique, un cercle circonscrit aux premières masselottes (300 ; 300' ; 300") desdits au moins deux systèmes mobiles (3 ; 3' ; 3") présente, d'une part et en position éloignée desdits au moins deux systèmes mobiles (3 ; 3' ; 3"), un rayon éloigné (voire un diamètre éloigné) et, d'autre part et en position rapprochée desdits au moins deux systèmes mobiles, un rayon rapproché (voire un diamètre rapproché) qui est inférieur au rayon éloigné (voire au diamètre éloigné).

De manière alternative ou (et de préférence) additionnelle, d'une part, un premier cercle, qui est circonscrit aux premières masselottes (300 ; 300' ; 300") desdits au moins deux systèmes mobiles (3 ; 3' ; 3"), présente un premier rayon (voire un premier diamètre) et, d'autre part, un deuxième cercle, qui est circonscrit aux deuxièmes masselottes (310 ; 310' ; 310") desdits au moins deux systèmes mobiles (3 ; 3' ; 3"), présente un deuxième rayon (voire un deuxième diamètre) qui est inférieur au premier rayon (voire au premier diamètre), ceci au moins en position éloignée, voire encore en position rapprochée, desdits au moins deux systèmes mobiles (3 ; 3' ; 3").

Tel que visible sur les figures en annexe, lesdits au moins deux systèmes mobiles (3 ; 3' ; 3") présentent, chacun, d'une part, une partie centrale 32 qui est montée en déplacement sur le plateau 2 (plus particulièrement en rotation sur ce plateau 2, ceci autour de l'axe de rotation X ; X' ; X" susmentionné), d'autre part, un premier bras 33, qui s'étend à partir de la partie centrale 32 (plus particulièrement selon une première droite), et qui présente une extrémité libre pourvue de la première masselotte (300 ; 300' ; 300") et, d'autre part, un deuxième bras 34, qui s'étend à partir de la partie centrale 32 (plus particulièrement selon une deuxième droite qui forme un angle aigu avec la première droite), et qui présente une extrémité libre pourvue de la deuxième masselotte (310 ; 310' ; 310").

Selon une autre caractéristique, d'une part, le premier bras 33 d'un tel système mobile (3 ; 3' ; 3") comporte une pluralité de moyens de fixation (6 ; 6' ; 6") et, d'autre part, les moyens de rappel (5 ; 5' ; 5") comportent une première extrémité qui est solidaire fixement du plateau 2 ainsi qu'une deuxième extrémité (qui est opposée à la première extrémité) qui comporte un moyen de fixation complémentaire qui est configuré pour coopérer avec l'un (6 ; 6' ; 6") des moyens de fixation (6 ; 6' ; 6") de la pluralité de moyens de fixation (6 ; 6' ; 6") que le premier bras 33 d'un tel système mobile (3 ; 3' ; 3") comporte.

A ce propos, on observera que les moyens de fixation (6 ; 6' ; 6"), que le premier bras 33 d'un tel système mobile (3 ; 3' ; 3") comporte, peuvent être positionnés à des distances différentes par rapport à l'axe de rotation (X ; X' ; X") d'un tel système mobile (3 ; 3' ; 3").

Cette caractéristique permet, avantageusement, aux moyens de rappel (5 ; 5' ; 5") d'exercer sur le premier bras 33 d'un tel système mobile (3 ; 3' ; 3").une force de rappel (plus particulièrement un couple de rappel) différente selon que ces moyens de rappel (5 ; 5' ; 5") coopèrent avec l'un ou avec l'autre de ces moyens de fixation (6 ; 6' ; 6").

Encore une autre caractéristique concerne le fait que le volant 1 comporte des moyens de limitation (7 ; 7' ; 7") qui sont configurés pour limiter le déplacement de chacun desdits au moins deux systèmes mobiles (3 ; 3' ; 3") par rapport au plateau 2, plus particulièrement pour limiter la rotation de chacun desdits au moins deux systèmes mobiles (3 ; 3' ; 3") par rapport au plateau 2, ceci autour de l'axe de rotation (X ; X' ; X").

De tels moyens de limitation (7 ; 7' ; 7") permettent, alors avantageusement, de limiter la rotation de chacun desdits au moins deux systèmes mobiles (3 ; 3' ; 3"), plus particulièrement entre la position éloignée et la position rapprochée.

De tels moyens de limitation (7 ; 7' ; 7") comportent, d'une part, une lumière 70 que chacun desdits au moins deux systèmes mobiles (3 ; 3' ; 3") comporte et, d'autre part, au moins deux plots 71, qui sont solidaires fixement du plateau 2, et qui s'étendent, chacun, à l'intérieur de la lumière 70 que chacun desdits au moins deux systèmes mobiles (3 ; 3' ; 3") comporte.

Tel que mentionné ci-dessus, le volant 1 comporte au moins deux systèmes mobiles (3 ; 3' ; 3"). Aussi et selon un mode de réalisation préféré, un tel volant 1 comporte trois systèmes mobiles (3 ; 3' ; 3").

Tel que mentionné ci-dessus, le volant 1 comporte des moyens de montage en déplacement (4 ; 4' ; 4") desdits au moins deux systèmes mobiles (3 ; 3' ; 3") par rapport au plateau 2. A ce propos, on observera qu'au moins ces moyens de montage en déplacement (4 ; 4' ; 4") et/ou lesdits au moins deux systèmes mobiles (3 ; 3' ; 3") peuvent être configurés pour permettre un montage de ces systèmes mobiles (3 ; 3' ; 3") par rapport au plateau 2 (plus particulièrement sur ce plateau 2), ceci dans un sens ou dans un sens inverse (plus particulièrement dans un sens opposé), notamment par retournement. Ces caractéristiques permettent, avantageusement, au volant 1 de fonctionner aussi bien en rotation horaire qu'en rotation anti-horaire.

De manière additionnelle, on observera que les dimensions générales du volant 1 à inertie dégressive, la géométrie des systèmes mobiles (3 ; 3' ; 3"), la masse des masselottes (300, 300', 300" ; 310, 310', 310") implantées sur un tel système mobile (3 ; 3' ; 3") ainsi que le tarage des moyens de rappel (5 ; 5' ; 5") et le positionnement des moyens de fixation (6 ; 6' ; 6") de ces moyens de rappel (5 ; 5' ; 5") peuvent être modifiés à volonté pour s'adapter aux caractéristiques du système rotatif motorisé sur lequel est implanté le volant d'inertie 1.

L'invention concerne, également, un système rotatif motorisé (non représenté) comportant, d'une part, un moteur (qui peut être thermique, électrique, hydraulique ou autre) à régime variable, d'autre part, au moins un élément rotatif, d'autre part encore, au moins un moyen de transmission qui est configuré pour transmettre un mouvement de rotation généré par le moteur audit au moins un élément rotatif et, d'autre part aussi, au moins un volant à inertie 1 qui est interposé entre le moteur et ledit au moins un élément rotatif, plus particulièrement entre le moteur et ledit moyen de transmission.

Dans ce système rotatif motorisé, ledit au moins un volant à inertie 1 est un volant à inertie variable dégressive 1 qui présente les caractéristiques décrites ci-dessus.

Un tel système rotatif motorisé peut être un véhicule automoteur (plus particulièrement un véhicule automobile, notamment une voiture ou une moto) dont le déplacement est assuré par l'intermédiaire d'un moteur (thermique ou électrique) à régime variable. Dans un tel véhicule automoteur, ledit au moins un élément rotatif peut être constitué par une roue.

Un tel système rotatif motorisé peut, encore, être une machine à laver ou à sécher dans laquelle l'élément rotatif peut être un tambour.

Un tel système rotatif motorisé peut, aussi, être une éolienne ou un ventilateur dans laquelle/lequel l'élément rotatif peut être une pale.

Un tel système rotatif motorisé peut, également, être une bande transporteuse dans laquelle l'élément rotatif peut être une roue ou un tambour.

## Revendications

1. Volant à inertie variable dégressive (1), ce volant (1) comporte, d'une part, un plateau (2) qui s'étend selon un plan et qui est configuré pour être mobile en rotation autour d'un axe de rotation principal (Xp) qui est perpendiculaire au plan, d'autre part, au moins deux systèmes mobiles (3 ; 3' ; 3"), d'autre part encore, des moyens de montage en déplacement (4 ; 4' ; 4") qui sont configurés pour assurer un montage en déplacement de chacun desdits au moins deux systèmes mobiles (3 ; 3' ; 3") par rapport au plateau (2), ceci entre une position éloignée par rapport à l'axe de rotation principal (Xp) et une position rapprochée par rapport à l'axe de rotation principal (Xp) et, d'autre part aussi, des moyens de rappel (5 ; 5' ; 5") qui sont configurés pour rappeler lesdits au moins deux systèmes mobile (3 ; 3' ; 3") vers la position éloignée, ceci au moins à partir de la position rapprochée, tandis que le volant (1) est configuré en sorte que lesdits au moins deux systèmes mobiles (3 ; 3' ; 3"), d'une part, adoptent la position éloignée pour une vitesse de rotation du plateau (2) inférieure ou égale à une vitesse déterminée et, d'autre part, se dirigent en direction de la position rapprochée, ceci en cas d'augmentation de la vitesse de rotation du plateau (2) et pour une vitesse de rotation du plateau (2) supérieure à la vitesse déterminée.

2. Volant (1) selon la revendication 1, **caractérisé par le fait que** les moyens de montage en déplacement (4 ; 4' ; 4") sont configurés pour assurer un montage en rotation de chacun desdits au moins deux systèmes mobiles (3 ; 3' ; 3") sur le plateau (2), ceci autour d'un axe de rotation (X ; X' ; X") qui est parallèle à l'axe de rotation principal (Xp) du plateau (2) ainsi qu'entre la position éloignée et la position rapprochée.

3. Volant (1) selon l'une quelconque des revendications précédentes, **caractérisé par le fait qu'**il est configuré en sorte qu'un cercle circonscrit (C) auxdits au moins deux systèmes mobiles (3 ; 3' ; 3") présente, d'une part et en position éloignée desdits au moins deux systèmes mobiles (3 ; 3' ; 3"), un rayon éloigné (Ré) et, d'autre part et en position rapprochée desdits au moins deux systèmes mobiles (3 ; 3' ; 3"), un rayon rapproché (Rr) qui est inférieur au rayon éloigné (Ré).

4. Volant (1) selon la revendication 2, **caractérisé par le fait que** lesdits au moins deux systèmes mobiles (3 ; 3' ; 3") comportent, chacun, d'une part, une première partie (30 ; 30' ; 30") d'un tel système mobile (3 ; 3' ; 3"), qui s'étend d'un premier côté d'un plan (P) qui passe par l'axe de rotation principal (Xp) du plateau (2) ainsi que par l'axe de rotation (X ; X' ; X") d'un tel système mobile (3 ; 3' ; 3"), et sur laquelle les moyens de rappel (5 ; 5' ; 5") agissent et, d'autre part, une deuxième partie (31 ; 31' ; 31") d'un tel système mobile (3 ; 3' ; 3"), qui s'étend d'un deuxième côté dudit plan (P), et au niveau de laquelle un centre de gravité (G) d'un tel système mobile (3 ; 3' ; 3") est localisé.

5. Volant (1) selon la revendication 4, **caractérisé par le fait que**, dans ce volant (1), d'une part, un premier cercle, qui est circonscrit à la première partie (30 ; 30' ; 30") desdits au moins deux systèmes mobiles (3 ; 3' ; 3"), présente un premier rayon éloigné en position éloignée desdits au moins deux systèmes mobiles (3 ; 3' ; 3") ainsi qu'un premier rayon rapproché en position rapprochée desdits au moins deux systèmes mobiles (3 ; 3' ; 3"), d'autre part, un deuxième cercle, qui est circonscrit à la deuxième partie (31 ; 31' ; 31") desdits au moins deux systèmes mobiles (3 ; 3' ; 3"), présente un deuxième rayon éloigné en position éloignée desdits au moins deux systèmes mobiles (3 ; 3' ; 3") ainsi qu'un deuxième rayon rapproché en position rapprochée desdits au moins deux systèmes mobiles (3 ; 3' ; 3"), d'autre part encore, le premier rayon éloigné est supérieur au premier rayon rapproché et, d'autre part aussi, le deuxième rayon éloigné et le deuxième rayon rapproché sont inférieurs au moins au premier rayon éloigné.

6. Volant (1) selon la revendication 4, **caractérisé par le fait que**, d'une part, la première partie (30 ; 30' ; 30") desdits au moins deux systèmes mobiles (3 ; 3' ; 3") présente une première masse et est soumise à une première force centrifuge sous l'effet de la rotation du plateau (2), d'autre part, la deuxième partie (31 ; 31' ; 31") desdits au moins deux systèmes mobiles (3 ; 3' ; 3") présente une deuxième masse et est soumise à une deuxième force centrifuge sous l'effet de la rotation du plateau (2), d'autre part encore, les moyens de rappel (5 ; 5' ; 5"), qui sont associés auxdits au moins deux systèmes mobiles (3 ; 3' ; 3"), présentent une force de rappel tandis que le volant (1) est configuré en sorte que, d'une part et pour une vitesse de rotation du plateau (2) inférieure ou égale à la vitesse de rotation déterminée, la deuxième force centrifuge est inférieure à la somme de la première force centrifuge et de la force de rappel, ceci de sorte que lesdits au moins deux systèmes mobiles (3 ; 3' ; 3") adoptent la position éloignée et, d'autre part et pour une vitesse de rotation du plateau (2) supérieure à la vitesse de rotation déterminée, la deuxième force centrifuge est supérieure à la somme de la première force centrifuge et de la force de rappel, ceci de sorte que lesdits au moins deux systèmes mobiles (3 ; 3' ; 3") adoptent au moins une position intermédiaire entre la position éloignée et la position rapprochée, voire adoptent la position rapprochée.

7. Volant (1) selon la revendication 4, **caractérisé par le fait que**, d'une part, la première partie (30 ; 30' ; 30") desdits au moins deux systèmes mobiles (3 ; 3' ; 3") comporte une première masselotte (300 ; 300' ; 300") qui présente une première masse et, d'autre part, la deuxième partie (31 ; 31' ; 31") desdits au moins deux systèmes mobiles (3 ; 3' ; 3") comporte une deuxième masselotte (310 ; 310' ; 310") qui présente une deuxième masse qui est supérieure à la première masse de la première masselotte (300 ; 300' ; 300").

8. Volant (1) selon la revendication 7, **caractérisé par le fait que** lesdits au moins deux systèmes mobiles (3 ; 3' ; 3") présentent, chacun, d'une part, une partie centrale (32) qui est montée en déplacement sur le plateau (2), d'autre part, un premier bras (33), qui s'étend à partir de la partie centrale (32), qui présente une extrémité libre pourvue de la première masselotte (300 ; 300' ; 300") et qui comporte une pluralité de moyens de fixation (6 ; 6' ; 6"), d'autre part, un deuxième bras (34), qui s'étend à partir de la partie centrale (32), et qui présente une extrémité libre pourvue de la deuxième masselotte (310 ; 310' ; 310") et, d'autre part encore, les moyens de rappel (5 ; 5' ; 5") comportent une première extrémité qui est solidaire fixement du plateau (2) ainsi qu'une deuxième extrémité qui comporte un moyen de fixation complémentaire qui est configuré pour coopérer avec l'un des moyens de fixation (6 ; 6' ; 6") de la pluralité de moyens de fixation (6 ; 6' ; 6)

9. Volant (1) selon l'une quelconque des revendications précédentes, **caractérisé par le fait qu'**il comporte des moyens de limitation (7 ; 7' ; 7") qui sont configurés pour limiter le déplacement de chacun desdits au moins deux systèmes mobiles (3 ; 3' ; 3") par rapport au plateau (2).

10. Système rotatif motorisé comportant, d'une part, un moteur à régime variable, d'autre part, au moins un élément rotatif, d'autre part encore, au moins un moyen de transmission qui est configuré pour transmettre un mouvement de rotation généré par le moteur audit au moins un élément rotatif et, d'autre part aussi, au moins un volant à inertie (1) qui est interposé entre le moteur et ledit au moins un élément rotatif, **caractérisé par le fait que** ledit au moins un volant à inertie (1) est un volant à inertie variable dégressive (1) conforme à l'une quelconque des revendications précédentes.
